# EUROPÄISCHE PATENTANMELDUNG

(11) **EP 3 690 689 A1**
(43) Veröffentlichungstag der Anmeldung: **05.08.2020**
(21) Anmeldenummer: 19154243.0
(22) Anmeldetag: 29.01.2019
(51) Int. Cl.: G06F 21/44, G06F 21/62

(54) **SYSTEM UND VERFAHREN ZUM SICHEREN AUSFÜHREN VON ANWENDUNGSPROGRAMMEN**

(71) Anmelder: Siemens Aktiengesellschaft, 80333 München (DE)
(72) Erfinder: Scholz, Andreas, 85716 Unterschleißheim (DE)

(57) **Zusammenfassung**

Es wird ein System zum Ausführen von Anwendungsprogrammen vorgeschlagen. Das System umfasst:
ein Gerät zum Ausführen der Anwendungsprogramme, wobei jedes Anwendungsprogramm geeignet ist, beim Ausführen auf dem Gerät Zugriffspunkte zu verwenden, um einen bestimmten Zugriff auf das Gerät zu erhalten; und
ein Definitionsgerät zum Definieren der Zugriffspunkte durch einen Teilnehmer, wobei jeder Zugriffspunkt zumindest eine Zugriffsvoraussetzung bestimmt, die durch das den Zugriffspunkt verwendende Anwendungsprogramm zu erfüllen ist, um den entsprechenden bestimmten Zugriff auf das Gerät zu erhalten; wobei
das Gerät aufweist:
eine Speichereinrichtung zum Speichern der Zugriffspunkte; und
eine Verarbeitungseinrichtung zum Bestimmen einer Überprüfungsinformation, die angibt, ob ein auf dem Gerät auszuführendes vorbestimmtes Anwendungsprogramm die Zugriffsvoraussetzung der Zugriffspunkte, die das vorbestimmte Anwendungsprogramm verwendet, erfüllt, und zum Zulassen des bestimmten Zugriffs durch das vorbestimmte Anwendungsprogramm in Abhängigkeit von der Überprüfungsinformation.

Anwendungsprogramme können somit auf sicherere Weise auf elektronischen Geräten ausgeführt werden.

## Beschreibung

Die vorliegende Erfindung betrifft ein System zum sicheren Ausführen von Anwendungsprogrammen. Die vorliegende Erfindung betrifft ferner ein Verfahren zum sicheren Ausführen der Anwendungsprogramme.

Elektronische Geräte sind häufig geeignet, Anwendungsprogramme von einem Dritten auszuführen. Die Anwendungsprogramme ermöglichen den elektronischen Geräten, zusätzliche Funktionen durchführen, die bei der Herstellung und/oder Programmierung der elektronischen Geräte noch nicht definiert waren. Es besteht der Bedarf, lediglich sichere Anwendungsprogramme auf den elektronischen Geräten auszuführen, um die Sicherheit und/oder Integrität der elektronischen Geräte nicht zu gefährden.

Vor diesem Hintergrund besteht eine Aufgabe der vorliegenden Erfindung darin, ein sicheres Ausführen von Anwendungsprogrammen zu verbessern.

Gemäß einem ersten Aspekt wird ein System zum sicheren Ausführen von Anwendungsprogrammen vorgeschlagen. Das System umfasst:
ein elektronisches Gerät zum Ausführen der Anwendungsprogramme, wobei jedes Anwendungsprogramm geeignet ist, beim Ausführen auf dem elektronischen Gerät eine Anzahl an Zugriffspunkten zu verwenden, um einen entsprechenden bestimmten Zugriff auf das elektronische Gerät zu erhalten; und
ein Definitionsgerät zum Definieren der Anzahl an Zugriffspunkten durch zumindest einen Teilnehmer, wobei jeder der Zugriffspunkte zumindest eine Zugriffsvoraussetzung bestimmt, die durch das den Zugriffspunkt verwendende Anwendungsprogramm zu erfüllen ist, um den entsprechenden bestimmten Zugriff auf das elektronische Gerät zu erhalten; wobei
das elektronische Gerät aufweist:
   eine Speichereinrichtung zum Speichern der anhand des Definitionsgeräts definierten Zugriffspunkte; und
   eine Verarbeitungseinrichtung zum Bestimmen einer Überprüfungsinformation, die angibt, ob ein auf dem elektronischen Gerät auszuführendes vorbestimmtes Anwendungsprogramm die jeweilige zumindest eine Zugriffsvoraussetzung der Anzahl an Zugriffspunkten, die das vorbestimmte Anwendungsprogramm verwendet, erfüllt, und zum Zulassen des bestimmten Zugriffs, den die durch das vorbestimmte Anwendungsprogramm verwendete Anzahl an Zugriffspunkten ermöglicht, durch das vorbestimmte Anwendungsprogramm in Abhängigkeit von der Überprüfungsinformation.

Das System ermöglicht insbesondere, den bestimmten Zugriff auf das elektronische Gerät nur Anwendungsprogrammen, die bestimmte Voraussetzungen erfüllen, zu ermöglichen. Dadurch kann die Sicherheit des elektronischen Geräts erhöht werden. Durch das Definieren der Zugriffspunkte kann die Auswahl der zulässigen Anwendungsprogramme auf flexible Weise ermöglicht werden. Insbesondere werden die Zugriffspunkte und die entsprechenden Zugriffsvoraussetzungen spezifisch für das elektronische Gerät und/oder für eine bestimmte Anwendung definiert.

Bei dem elektronischen Gerät handelt es sich zum Beispiel um ein Gerät einer industriellen Produktionsanlage. Das elektronische Gerät kann ein Computer, ein tragbares Telefon, eine Produktionsmaschine oder dergleichen sein.

Die Anwendungsprogramme, im Folgenden auch "Applikationen" genannt, werden insbesondere von einem anderen Hersteller als das elektronische Gerät bereitgestellt. Die Anwendungsprogramme können von einer externen Speichereinheit, zum Beispiel einer Cloud, auf das elektronische Gerät heruntergeladen werden. Das Ausführen der Anwendungsprogramme auf dem elektronischen Gerät stellt dem elektronischen Gerät insbesondere zusätzliche Funktionen bereit, die ein Hersteller des elektronischen Geräts nicht vorgesehen hatte.

Bei dem bestimmten Zugriff auf das elektronische Gerät handelt es sich um ein Beispiel für eine zusätzliche durch das Anwendungsprogramm bereitstellbare Funktion. Der bestimmte Zugriff auf das elektronische Gerät wird insbesondere nur ermöglicht, wenn auf dem elektronischen Gerät eine Anzahl an geeigneten Zugriffspunkten vorgesehen ist, die durch das auszuführende Anwendungsprogramm verwendet wird. Die Zugriffspunkte können Programme sein, die zusammen mit den entsprechenden Anwendungsprogrammen durchführt werden, um den bestimmten Zugriff zu erhalten. Insbesondere konfigurieren die Zugriffspunkte das auszuführende Anwendungsprogramm derart, dass nur zugelassene Funktionen durch das auszuführende Anwendungsprogramm durchgeführt werden können.

Der bestimmte Zugriff ermöglicht dem Anwendungsprogramm zum Beispiel, auf bestimmte Daten des elektronischen Geräts zuzugreifen, eine Positionsinformation des elektronischen Geräts zu erhalten, eine Kamera und/oder ein Mikrofon des elektronischen Geräts zu verwenden oder dergleichen. Der Ausdruck "Anzahl an Zugriffspunkten" bedeutet insbesondere "zumindest ein Zugriffspunkt".

Jeder Zugriffspunkt kann einen Namen aufweisen, anhand dem der Zugriffspunkt von einem Anwendungsprogramm referenziert werden kann. Die Entwickler des Anwendungsprogramms können die durch das Anwendungsprogramm benötigte Zugriffspunkte festlegen. Hierzu können zum Beispiel Metadaten dem Anwendungsprogramm beigelegt werden, welche die benötigten Zugriffspunkte definieren. Alternativ kann die Information über die benötigten Zugriffspunkte auch in einer Datei gespeichert werden, die das elektronische Gerät erhält, wenn das Anwendungsprogramm auf das elektronische Gerät geladen wird oder wenn es auf einen externen Speicher zugreift.

Die Zugriffspunkte können anhand des Definitionsgeräts definiert werden. Hierzu können ein oder mehrere Teilnehmer Kriterien für die Zugriffspunkte festlegen, welche das Definitionsgerät beim Erstellen der Zugriffspunkte berücksichtigt. Bei den Teilnehmern handelt es sich insbesondere um Zugriffseinrichtungen von unterschiedlichen Personen. Diese unterschiedlichen Personen sind zum Beispiel ein Hersteller des elektronischen Geräts, ein Hersteller eines oder mehrerer Anwendungsprogramme, ein Anbieter des Betriebssystems des elektronischen Geräts und/oder ein Benutzer des elektronischen Geräts. Die Zugriffspunkte durch eine Vielzahl von Teilnehmern zu definieren ist insbesondere dahingehend vorteilhaft, dass mehrere Parteien bei der Definition der Zugriffspunkte mitwirken können und deswegen keine der Parteien die Definition der Zugriffspunkte monopolisiert.

Die definierten Zugriffspunkte können in Abhängigkeit von dem elektronischen Gerät, für das die Zugriffspunkte bestimmt sind, variieren. Anders ausgedrückt, definiert das Definitionsgerät insbesondere keine festgelegte Liste an Zugriffspunkten, sondern definiert die Zugriffspunkte auf flexible und konfigurierbare Weise.

Das Definitionsgerät und das elektronische Gerät sind insbesondere physikalisch voneinander getrennte Einrichtungen. Bei dem Definitionsgerät und dem elektronischen Gerät kann es sich um dedizierte Einrichtungen handeln. Das Definitionsgerät kann auch als Managementgerät bezeichnet werden. Nach dem Definieren der Zugriffspunkte mit dem Definitionsgerät werden die Zugriffspunkte in die Speichereinrichtung des elektronischen Geräts gespeichert. Hierzu können die Zugriffspunkte zum Beispiel von dem Definitionsgerät auf einen Datenträger geladen werden und anschließend auf das elektronische Gerät übertragen werden.

Die Speichereinrichtung ist zum Beispiel ein flüchtiger oder ein nicht flüchtiger Datenspeicher. Welche Zugriffspunkte durch das elektronische Gerät unterstützt werden, kann durch den Hersteller des elektronischen Geräts vorgegeben sein. Die Zugriffspunkte werden vorzugsweise nicht alle gleichzeitig auf das elektronische Gerät geladen, sondern können auch dynamisch und/oder flexibel während des Betriebs des elektronischen Geräts gespeichert werden.

Die zumindest eine Zugriffsvoraussetzung der jeweiligen Zugriffspunkte ist insbesondere durch das Anwendungsprogramm, welches den Zugriffspunkt verwendet, zu erfüllen, damit der bestimmte Zugriff auf das elektronische Gerät erhalten werden kann. Die Zugriffsvoraussetzung kann somit dazu dienen, den Zugriff des Anwendungsprogramms auf das elektronische Gerät einzuschränken und/oder zu steuern.

Die Verarbeitungseinrichtung des elektronischen Geräts überprüft insbesondere, ob das auszuführende Anwendungsprogramm die zumindest eine Zugriffsvoraussetzung der Anzahl an Zugriffspunkte, die das Anwendungsprogramm zum Erhalten des bestimmten Zugriffs verwendet, erfüllt, und bestimmt eine entsprechende Überprüfungsinformation. In Abhängigkeit von der Überprüfungsinformation kann die Verarbeitungseinrichtung den bestimmten Zugriff, den die durch das vorbestimmte Anwendungsprogramm verwendete Anzahl an Zugriffspunkten ermöglicht, zulassen oder verweigern.

Der bestimmte Zugriff wird zum Beispiel zugelassen, wenn die Überprüfungsinformation angibt, dass das Anwendungsprogramm alle Zugriffsvoraussetzungen der entsprechenden Zugriffspunkte erfüllt. Der bestimmte Zugriff wird zum Beispiel verweigert, wenn die Überprüfungsinformation angibt, dass das Anwendungsprogramm nicht alle Zugriffsvoraussetzungen der entsprechenden Zugriffspunkte erfüllt. Falls die Überprüfungsinformation angibt, dass das auszuführende Anwendungsprogramm nur einige der Zugriffsvoraussetzungen der zu verwendenden Zugriffspunkte verwendet, kann die Verarbeitungseinrichtung den bestimmten Zugriff beschränkt zulassen. Der bestimmte Zugriff auf das elektronische Gerät wird in Abhängigkeit des Anwendungsprogramms zugelassen.

Gemäß einer Ausführungsform ist die Verarbeitungseinrichtung eingerichtet, den bestimmten Zugriff, den die durch das vorbestimmte Anwendungsprogramm verwendete Anzahl an Zugriffspunkten ermöglicht, durch das vorbestimmte Anwendungsprogramm lediglich zuzulassen, wenn die Überprüfungsinformation angibt, dass das auf dem elektronischen Gerät auszuführende vorbestimmte Anwendungsprogramm die jeweilige zumindest eine Zugriffsvoraussetzung der Anzahl an Zugriffspunkten, die das vorbestimmte Anwendungsprogramm verwendet, erfüllt.

Gemäß einer weiteren Ausführungsform sind das Anwendungsprogramm und die zugehörige Anzahl an Zugriffspunkten geeignet, beim gemeinsamen Ausführen auf dem elektronischen Gerät den bestimmten Zugriff auf das elektronische Gerät zu ermöglichen. Die Zugriffspunkte sind insbesondere Teil des Programms, das ausgeführt werden muss, um dem Anwendungsprogramm den bestimmten Zugriff zu gewähren.

Gemäß einer weiteren Ausführungsform umfassen die Zugriffsvoraussetzungen zumindest eine Voraussetzung bezüglich eines Herstellers des Anwendungsprogramms, einer Herkunft des Anwendungsprogramms, einer Funktion des Anwendungsprogramms und/oder einer Umgebungseigenschaft des elektronischen Geräts.

Die Zugriffsvoraussetzung kann zum Beispiel angeben, dass nur Anwendungsprogramme von einem bestimmten Hersteller zulässig sind und/oder bestimmte Rechte (wie zum Beispiel Administratorrechte) bekommen sollen.

Die Herkunft des Anwendungsprogramms gibt zum Beispiel an, wie das Anwendungsprogramm auf das elektronische Gerät gelangt ist, insbesondere von wo das Anwendungsprogramm auf das elektronische Gerät gespeichert wurde.

Die Zugriffsvoraussetzungen können hinsichtlich der Funktion des Anwendungsprogramms beispielsweise vorschreiben, dass nur Anwendungsprogramme, die keinen Zugriff auf ein internes Netzwerk benötigen, zugelassen werden.

Die Zugriffsvoraussetzungen können ferner angeben, dass dem vorbestimmten Anwendungsprogramm der bestimmte Zugriff nur dann gewährt wird, wenn die Umgebungseigenschaft erfüllt ist. Diese Umgebungseigenschaft ist zum Beispiel eine Uhrzeit oder eine Lokalisierung des elektronischen Geräts. Wenn die Zugriffsvoraussetzungen eine Uhrzeit umfassen, wird der bestimmte Zugriff beispielsweise nur nachts ermöglicht, um einen parallellaufenden Prozess des elektronischen Geräts nicht zu beeinflussen. Die Umgebungseigenschaft kann auch ein Zustand des elektronischen Geräts sein. Insbesondere wird der bestimmte Zugriff nicht gewährt, wenn das elektronische Gerät gerade im Rahmen eines Produktionsverfahrens tätig ist (zum Beispiel, wenn das elektronische Gerät eine Fräsung durchführt). Dadurch kann sichergestellt werden, dass das Anwendungsprogramm keine Störungen des elektronischen Geräts hervorruft.

Gemäß einer weiteren Ausführungsform weist das elektronische Gerät ferner auf:
eine Ausgabeeinrichtung zum Ausgeben einer Nachfrage an einen Benutzer des elektronischen Geräts, anhand der der Benutzer gefragt wird, ob er dem bestimmten Zugriff auf das elektronische Gerät durch das zu benutzende Anwendungsprogramm zustimmt; und
eine Empfangseinrichtung zum Empfangen einer Antwort auf die Nachfrage von dem Benutzer; wobei
die Verarbeitungseinrichtung geeignet ist, den bestimmten Zugriff auf das elektronische Gerät durch das vorbestimmte Anwendungsprogramm lediglich zuzulassen, falls die Antwort auf die Nachfrage angibt, dass der Benutzer dem bestimmten Zugriff zustimmt.

Durch die Nachfrage an den Benutzer, ob er dem bestimmten Zugriff zustimmt, kann der Zugriff des Anwendungsprogramms auf das elektronische Gerät ferner gesteuert werden. Das elektronische Gerät und insbesondere der Zugriff auf das Anwendungsprogramm kann dadurch individuell konfiguriert werden. Die Sicherheit des elektronischen Geräts wird dadurch ferner erhöht.

Die Nachfrage kann ein Signal sein, dass die Ausgabeeinrichtung dem Benutzer zum Beispiel über einen Bildschirm anzeigt. Der Benutzer kann mit der Antwort auf die Nachfrage dem Zugriff zustimmen oder diesen ablehnen. Die Empfangseinrichtung des elektronischen Geräts ist dabei zum Beispiel ein Touchscreen, ein Knopf des elektronischen Geräts oder dergleichen.

Anhand der Nachfrage kann der Benutzer zusätzlich auch gefragt werden, wie viele Ressourcen er dem Anwendungsprogramm bereitstellen möchte. In einer alternativen Ausführungsform wird die Antwort durch eine automatisierte Einrichtung bereitgestellt, die beispielsweise anhand eines neuronalen Netzes zu Entscheidungszwecken trainiert wurde.

Gemäß einer weiteren Ausführungsform weist das elektronische Gerät ferner auf:
eine Überprüfungseinrichtung zum Überprüfen, ob ein zu installierendes Anwendungsprogramm die jeweilige zumindest eine Zugriffsvoraussetzung der Anzahl an Zugriffspunkten, die das zu installierende Anwendungsprogramm verwendet, erfüllt; und
eine Installiereinrichtung zum Installieren des zu installierenden Anwendungsprogramms auf dem elektronischen Gerät lediglich, falls die Überprüfungseinrichtung bestimmt, dass das zu installierende Anwendungsprogramm die jeweilige zumindest eine Zugriffsvoraussetzung der Anzahl an Zugriffspunkten, die das zu installierende Anwendungsprogramm verwendet, erfüllt.

Bevor ein Anwendungsprogramm auf dem elektronischen Gerät installiert wird, kann dessen Zulässigkeit hinsichtlich der Zugriffsvoraussetzungen überprüft werden. Insbesondere werden nur diejenigen Anwendungsprogramme installiert, die alle Zugriffsvoraussetzungen der für das Anwendungsprogramm notwendigen Zugriffspunkte erfüllt. Ein Anwendungsprogramm, das eine oder mehrere Zugriffsvoraussetzungen der für das Anwendungsprogramm notwendigen Zugriffspunkte nicht erfüllt, wird insbesondere nicht installiert. Dies erhöht insbesondere die Sicherheit des elektronischen Geräts, weil nicht erwünschte Anwendungsprogramme gar nicht erst auf das elektronische Gerät geladen werden.

Gemäß einer weiteren Ausführungsform enthalten die jeweiligen Zugriffspunkte ferner Zugriffseigenschaften, welche Eigenschaften des durch den Zugriffspunkt gewährbaren bestimmten Zugriffs definieren.

Die Zugriffseigenschaften geben insbesondere an, welche Ressourcen und wie viele Ressourcen dem Anwendungsprogramm durch den bestimmten Zugriff zur Verfügung gestellt werden. Dadurch kann eine Ressourcensteuerung ermöglicht werden. Die Zugriffseigenschaft kann auch zum Beispiel angeben, dass der bestimmte Zugriff ein Lesen von bestimmten Daten ermöglicht, aber kein Schreiben von Daten.

Ein Zugriffspunkt kann auch mehrere Versionen mit unterschiedlichen Zugriffseigenschaften aufweisen. In diesem Fall gibt das Anwendungsprogramm, das diesen Zugriffspunkt verwenden möchte, die benötigte Version vorzugsweise an.

Gemäß einem zweiten Aspekt wird ein Definitionsgerät für ein System gemäß dem ersten Aspekt oder gemäß einer Ausführungsform des ersten Aspekts vorgeschlagen. Das Definitionsgerät ist geeignet, anhand von Angaben des zumindest einen Teilnehmers die Anzahl an Zugriffspunkten zu definieren, wobei jeder der Zugriffspunkte zumindest eine Zugriffsvoraussetzung bestimmt, die durch ein den Zugriffspunkt verwendendes Anwendungsprogramm zu erfüllen ist, um einen entsprechenden bestimmten Zugriff auf ein elektronisches Gerät zu erhalten.

Die für die vorgeschlagene Vorrichtung beschriebenen Ausführungsformen und Merkmale gelten für das vorgeschlagene Definitionsgerät entsprechend.

Gemäß einem dritten Aspekt wird ein Verfahren zum sicheren Ausführen von Anwendungsprogrammen vorgeschlagen. Das Verfahren umfasst:
Ausführen der Anwendungsprogramme auf einem elektronischen Gerät, wobei jedes Anwendungsprogramm geeignet ist, beim Ausführen auf dem elektronischen Gerät eine Anzahl an Zugriffspunkten zu verwenden, um einen bestimmten Zugriff auf das elektronische Gerät zu erhalten;
Definieren der Anzahl an Zugriffspunkten durch zumindest einen Teilnehmer anhand eines Definitionsgeräts, wobei jeder der Zugriffspunkte zumindest eine Zugriffsvoraussetzung bestimmt, die durch das den Zugriffspunkt verwendende Anwendungsprogramm zu erfüllen ist, um den entsprechenden bestimmten Zugriff auf das elektronische Gerät zu erhalten;
Speichern der anhand des Definitionsgeräts definierten Zugriffspunkte auf dem elektronischen Gerät;
Bestimmen einer Überprüfungsinformation durch das elektronische Gerät, die angibt, ob ein auf dem elektronischen Gerät auszuführendes vorbestimmtes Anwendungsprogramm die jeweilige zumindest eine Zugriffsvoraussetzung der Anzahl an Zugriffspunkten, die das vorbestimmte Anwendungsprogramm verwendet, erfüllt; und
Zulassen des bestimmten Zugriffs, den die durch das vorbestimmte Anwendungsprogramm verwendete Anzahl an Zugriffspunkten ermöglicht, durch das vorbestimmte Anwendungsprogramm in Abhängigkeit von der Überprüfungsinformation.

Gemäß einer Ausführungsform wird das Verfahren gemäß dem dritten Aspekt anhand des Systems gemäß dem ersten Aspekt oder gemäß einer Ausführungsform des ersten Aspekts durchgeführt.

Die für die vorgeschlagene Vorrichtung beschriebenen Ausführungsformen und Merkmale gelten für das vorgeschlagene Verfahren entsprechend.

Gemäß einem vierten Aspekt wird ein Computerprogrammprodukt vorgeschlagen, welches auf einer programmgesteuerten Einrichtung die Durchführung des Verfahrens gemäß dem dritten Aspekt veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt ein System zum sicheren Ausführen von Anwendungsprogrammen;
Fig. 2 zeigt ein Beispiel eines Definierens von Zugriffspunkten anhand eines Definitionsgeräts; und
Fig. 3 zeigt ein Verfahren zum sicheren Ausführen von Anwendungsprogrammen.

In den Figuren sind gleiche oder funktionsgleiche Elemente mit denselben Bezugszeichen versehen worden, sofern nichts anderes angegeben ist.

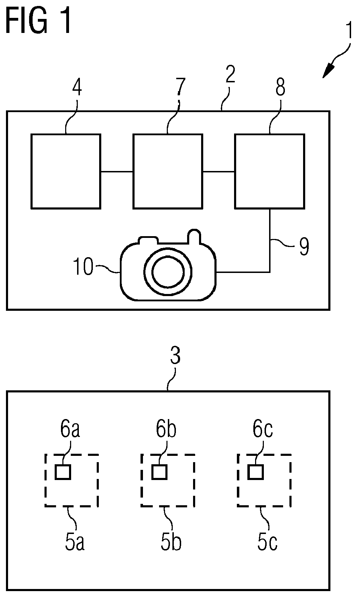

Die Fig. 1 zeigt ein System 1 zum sicheren Ausführen von Anwendungsprogrammen 4. Das System 1 umfasst ein elektronisches Gerät 2 sowie ein Definitionsgerät 3. Das elektronische Gerät 2 ist vorliegend als Produktionsgerät einer nicht dargestellten Produktionsstätte ausgebildet. Das elektronische Gerät 2 und das Definitionsgerät 3 sind physikalisch voneinander getrennt und sind auch kommunikativ nicht miteinander gekoppelt.

Das elektronische Gerät 2 umfasst Anwendungsprogramme 4, eine Speichereinrichtung 7, eine Verarbeitungseinrichtung 8 und eine Kamera 10, welche über ein internes Kabel 9 miteinander verbunden sind. Die Anwendungsprogramme 4 sind Softwareapplikationen, die nicht Teil der Grundausstattung des elektronischen Geräts 2 sind. Sie werden vielmehr bei der Benutzung des elektronischen Geräts 2 durch einen Benutzer auf das elektronische Gerät 2 geladen (zum Beispiel aus dem Internet). Die Anwendungsprogramme 4 werden auf dem elektronischen Gerät 2 ausgeführt. Anhand der Anwendungsprogramme 4 können die Funktionen des elektronischen Geräts 2 flexibel erweitert werden.

Die Speichereinrichtung 7 ist ein nicht flüchtiger Datenspeicher. Bei der Verarbeitungseinrichtung 8 handelt es sich in der vorliegenden Ausführungsform um einen Prozessor. Die Kamera 10 dient dazu, mit dem elektronischen Gerät 2 Fotos aufzunehmen und zu speichern. Um die Kamera 10 benutzen zu können, benötigt ein Anwendungsprogramm 4 einen bestimmten Zugriff auf das elektronische Gerät 2, insbesondere auf dessen Kamera 10.

In der Ausführungsform der Fig. 1 befindet sich das Definitionsgerät 3 nicht in der Produktionsstätte, in der das elektronische Gerät 2 eingesetzt wird, sondern in einem von dieser Produktionsstätte entfernten Ort, in dem Zugriffspunkte 5a - 5c mit entsprechenden Zugriffsvoraussetzungen 6a - 6c definiert werden. Um den bestimmten Zugriff auf das elektronische Gerät 2, zum Beispiel auf die Kamera 10, zu erhalten, benutzt das auszuführende Anwendungsprogramm 4 diejenigen Zugriffspunkte 5a - 5c, die in dem Anwendungsprogramm 4 referenziert sind. Hierzu erfüllt das Anwendungsprogramm 4 alle Zugriffsvoraussetzungen 6a - 6c der referenzierten Zugriffspunkte 5a - 5c.

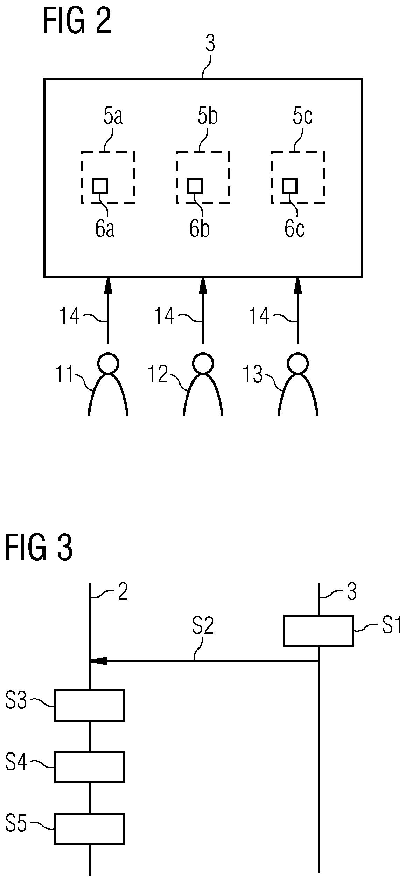

Die Funktion der einzelnen Elemente des Systems 1 wird anhand der Figuren 2 und 3 näher beschrieben.

Die Fig. 3 zeigt ein Verfahren zum sicheren Ausführen der Anwendungsprogramme 4. In einem Schritt S1 werden anhand des Definitionsgeräts 3 die Zugriffspunkte 5a - 5c und deren Zugriffsvoraussetzungen 6a - 6c definiert. Die Fig. 2 zeigt ein Beispiel des Schrittes S1, nämlich ein Definieren der Zugriffspunkte 5a - 5c anhand des Definitionsgeräts 3.

In dem Beispiel der Fig. 2 definieren drei Teilnehmer 11 - 13 gemeinsam die Zugriffspunkte 5a - 5c. Bei dem Teilnehmer 11 handelt es sich um den Entwickler der Anwendungsprogramme 4. Bei dem Teilnehmer 12 handelt es sich um den Hersteller des elektronischen Geräts 2. Bei dem Teilnehmer 13 handelt es sich um den Entwickler des Betriebssystems des elektronischen Geräts 2. Jeder der Teilnehmer 11 - 13 übermittelt eine Definitionsinformation 14 an das Definitionsgerät 3. Die Definitionsinformation 14 definiert Kriterien, gemäß denen das Definitionsgerät 3 die Zugriffspunkte 5a - 5c und deren Zugriffsvoraussetzungen 6a - 6c bestimmt.

Die Definitionsinformation 14 gibt zum Beispiel an, dass ein Teilnehmer 11 - 13 möchte, dass nur Anwendungsprogramme 4 von einem vorgegebenen Entwickler Zugriff auf die Kamera 10 erhalten. Bei einer solchen Definitionsinformation 14 definiert das Definitionsgerät 3 einen Zugriffspunkt 5a - 5c mit einer Zugriffsvoraussetzung 6a - 6c, die angibt, dass nur Anwendungsprogramme 4 von dem vorgegebenen Entwickler Zugriff auf die Kamera 10 (vorbestimmter Zugriff) erhalten dürfen.

Das Definitionsgerät 3 definiert somit die Zugriffspunkte 5a - 5c und deren Zugriffsvoraussetzungen 6a - 6c in Abhängigkeit von den Definitionsinformationen 14 der mehreren Teilnehmer 11 - 13. Die Zugriffspunkte 5a - 5c erhalten ferner jeweils einen Namen, anhand dessen sie durch ein Anwendungsprogramm 4, das den Zugriffspunkt 5a - 5c verwendet, referenziert werden können. Die Zugriffspunkte 5a - 5c enthalten ferner Zugriffseigenschaften, die Eigenschaften des durch die entsprechenden Zugriffspunkte 5a - 5c ermöglichten bestimmten Zugriffs bestimmen. Die Zugriffseigenschaften geben zum Beispiel an, wie lange das Anwendungsprogramm 4 die Kamera 10 benutzen darf, wo die Fotos von der Kamera 10 in dem elektronischen Gerät 2 zu speichern sind oder dergleichen.

In einem Schritt S2 der Fig. 3 werden die Zugriffspunkte 5a - 5c mit den entsprechenden Zugriffsvoraussetzungen 6a - 6c an das elektronische Gerät 2 übertragen. Hierzu werden die Zugriffspunkte 5a - 5c zum Beispiel auf einem Speichermedium gespeichert. Das Speichermedium wird an den Hersteller des elektronischen Geräts 2 verkauft. Dieser lädt dann die auf dem Speichermedium gespeicherte Zugriffspunkte 5a - 5c auf die Speichereinrichtung 7 seines elektronischen Geräts 2.

In einem Schritt S3 der Fig. 3 bestimmt die Verarbeitungseinrichtung 8 des elektronischen Geräts 2 eine Überprüfungsinformation für ein vorbestimmtes Anwendungsprogramm 4 der mehreren Anwendungsprogramme 4. Das vorbestimmte Anwendungsprogramm 4 ist ein Programm, dass eine Gesichtserkennung des Benutzers des elektronischen Geräts 2 ermöglicht. Hierzu benötigt das vorbestimmte Anwendungsprogramm 4 einen bestimmten Zugriff auf das elektronische Gerät 2, nämlich einen Zugriff auf die Kamera 10. Die Überprüfungsinformation gibt an, ob das vorbestimmte Anwendungsprogramm 4 alle Zugriffsvoraussetzungen 6a - 6c der Zugriffspunkte 5a - 5c, die das vorbestimmte Anwendungsprogramm 4 benötigt, um den bestimmten Zugriff auf die Kamera 10 zu erhalten, erfüllt. Zum Bestimmen der Überprüfungsinformation überprüft die Verarbeitungseinrichtung 8 zum Beispiel, ob das vorbestimmte Anwendungsprogramm 4 von dem zugelassenen Entwickler stammt.

In einem Schritt S4 der Fig. 3 lässt die Verarbeitungseinrichtung 8 den bestimmten Zugriff auf die Kamera 10 in Abhängigkeit von der Überprüfungsinformation zu oder verhindert ihn. Falls die Überprüfungsinformation angibt, dass das vorbestimmte Anwendungsprogramm 4 alle Zugriffsvoraussetzungen 6a - 6c der Zugriffspunkte 5a - 5c, die das vorbestimmte Anwendungsprogramm 4 benötigt, um den bestimmten Zugriff auf die Kamera 10 zu erhalten, erfüllt, ermöglicht die Verarbeitungseinrichtung 8 dem vorbestimmten Anwendungsprogramm 4, auf die Kamera 10 zuzugreifen. Falls die Überprüfungsinformation angibt, dass das vorbestimmte Anwendungsprogramm 4 nicht alle Zugriffsvoraussetzungen 6a - 6c der Zugriffspunkte 5a - 5c, die das vorbestimmte Anwendungsprogramm 4 benötigt, um den bestimmten Zugriff auf die Kamera 10 zu erhalten, erfüllt, verhindert die Verarbeitungseinrichtung 8 dem vorbestimmten Anwendungsprogramm 4, auf die Kamera 10 zuzugreifen. In diesen Fall kann die Verarbeitungseinrichtung 8 eine Warnmeldung an einen Benutzer des elektronischen Geräts 2 ausgeben.

In einem Schritt S5 der Fig. 3 wird das vorbestimmte Anwendungsprogramm 4 auf dem elektronischen Gerät 2 ausgeführt, sodass es anhand der referenzierten Zugriffspunkte 5a - 5c den bestimmten Zugriff auf die Kamera 10 erhält. Insbesondere wird der Schritt S5 der Fig. 3 nur korrekt durchgeführt, falls der bestimmte Zugriff in dem Schritt S4 zugelassen wird.

Der bestimmte Zugriff auf das elektronische Gerät 2 durch das Anwendungsprogramm 4 wird nur gewährt, wenn das Anwendungsprogramm 2 alle Zugriffsvoraussetzungen 6a - 6c der referenzierten Zugriffspunkte 5a - 5c erfüllt. Dadurch wird die Sicherheit des elektronischen Geräts 2 erhöht. Da die Zugriffspunkte 5a - 5c flexibel bestimmt werden, wird auch die Sicherheit des elektronischen Geräts 2 weiter erhöht.

Obwohl die vorliegende Erfindung anhand von Ausführungsbeispielen beschrieben wurde, ist sie vielfältig modifizierbar. Es sind zum Beispiel andere Zugriffsvoraussetzungen 6a - 6c denkbar, insbesondere das Herstellungsdatum des Anwendungsprogramm 4 oder dergleichen. Es ist auch möglich, bereits vor dem Installieren des Anwendungsprogramms 4 zu überprüfen, ob das Anwendungsprogramm 4 alle Zugriffsvoraussetzungen 6a - 6c der referenzierten Zugriffspunkte 5a - 5c erfüllt. In diesem Fall wird das Anwendungsprogramm 4 nur dann installiert, falls es alle Zugriffsvoraussetzungen 6a - 6c der referenzierten Zugriffspunkte 5a - 5c erfüllt.

In weiteren Ausführungsformen können einige der Zugriffspunkte 5a - 5c ferner mehrere Versionen beinhalten, die jeweils unterschiedliche Zugriffseigenschaften definieren. In diesem Fall gibt das Anwendungsprogramm 4, das den Zugriffspunkt 5a - 5c benutzen möchte, auch die Version, auf die es zugreifen möchte, an.

In einigen weiteren Ausführungsformen kann der Benutzer des elektronischen Geräts 2 bei der Bestimmung, ob ein vorbestimmtes Anwendungsprogramm 4 zuzulassen ist, mitwirken. Hierzu gibt das elektronische Gerät 2 anhand einer nicht dargestellten Ausgabeeinrichtung eine Nachfrage an den Benutzer aus, um ihn zu fragen, ob er dem vorbestimmten Zugriff des Anwendungsprogramms 4 zulässt. Der Benutzer kann dann über eine Empfangseinrichtung des elektronischen Geräts 2 eine Antwort auf die Nachfrage bereitstellen. Diese Antwort wird bei der Entscheidung, ob der bestimmte Zugriff zugelassen wird (Schritt S4), berücksichtigt.

### Bezugszeichenliste

- 1: System
- 2: elektronisches Gerät
- 3: Definitionsgerät
- 4: Anwendungsprogramm
- 5a - 5c: Zugriffspunkt
- 6a - 6c: Zugriffsvoraussetzung
- 7: Speichereinrichtung
- 8: Verarbeitungseinrichtung
- 9: internes Kabel
- 10: Kamera
- 11-13: Teilnehmer
- 14: Definitionsinformation
- S1 - S5: Verfahrensschritte

## Patentansprüche

1. System (1) zum sicheren Ausführen von Anwendungsprogrammen (4), wobei das System (1) umfasst:
ein elektronisches Gerät (2) zum Ausführen der Anwendungsprogramme (4), wobei jedes Anwendungsprogramm (4) geeignet ist, beim Ausführen auf dem elektronischen Gerät (2) eine Anzahl an Zugriffspunkten (5a - 5c) zu verwenden, um einen entsprechenden bestimmten Zugriff auf das elektronische Gerät (2) zu erhalten; und
ein Definitionsgerät (3) zum Definieren der Anzahl an Zugriffspunkten (5a - 5c) durch zumindest einen Teilnehmer (11 - 13), wobei jeder der Zugriffspunkte (5a - 5c) zumindest eine Zugriffsvoraussetzung (6a - 6c) bestimmt, die durch das den Zugriffspunkt (5a - 5c) verwendende Anwendungsprogramm (4) zu erfüllen ist, um den entsprechenden bestimmten Zugriff auf das elektronische Gerät (2) zu erhalten; wobei
das elektronische Gerät (2) aufweist:
eine Speichereinrichtung (7) zum Speichern der anhand des Definitionsgeräts (3) definierten Zugriffspunkte (5a - 5c); und
eine Verarbeitungseinrichtung (8) zum Bestimmen einer Überprüfungsinformation, die angibt, ob ein auf dem elektronischen Gerät (2) auszuführendes vorbestimmtes Anwendungsprogramm (4) die jeweilige zumindest eine Zugriffsvoraussetzung (6a - 6c) der Anzahl an Zugriffspunkten (5a - 5c), die das vorbestimmte Anwendungsprogramm (4) verwendet, erfüllt, und zum Zulassen des bestimmten Zugriffs, den die durch das vorbestimmte Anwendungsprogramm (4) verwendete Anzahl an Zugriffspunkten (5a - 5c) ermöglicht, durch das vorbestimmte Anwendungsprogramm (4) in Abhängigkeit von der Überprüfungsinformation.

2. System nach Anspruch 1,
**dadurch gekennzeichnet,**
**dass** die Verarbeitungseinrichtung (8) eingerichtet ist, den bestimmten Zugriff, den die durch das vorbestimmte Anwendungsprogramm (4) verwendete Anzahl an Zugriffspunkten (5a - 5c) ermöglicht, durch das vorbestimmte Anwendungsprogramm (4) lediglich zuzulassen, wenn die Überprüfungsinformation angibt, dass das auf dem elektronischen Gerät (2) auszuführende vorbestimmte Anwendungsprogramm (4) die jeweilige zumindest eine Zugriffsvoraussetzung (6a - 6c) der Anzahl an Zugriffspunkten (5a - 5c), die das vorbestimmte Anwendungsprogramm (4) verwendet, erfüllt.

3. System nach Anspruch 1 oder 2,
**dadurch gekennzeichnet,**
**dass** das Anwendungsprogramm (4) und die zugehörige Anzahl an Zugriffspunkten (5a - 5c) geeignet sind, beim gemeinsamen Ausführen auf dem elektronischen Gerät (2) den bestimmten Zugriff auf das elektronische Gerät (2) zu ermöglichen.

4. System nach einem der Ansprüche 1 - 3,
**dadurch gekennzeichnet,**
**dass** die Zugriffsvoraussetzungen (6a - 6c) zumindest eine Voraussetzung bezüglich eines Herstellers des Anwendungsprogramms (4), einer Herkunft des Anwendungsprogramms (4,) einer Funktion des Anwendungsprogramms (4) und/oder einer Umgebungseigenschaft des elektronischen Geräts umfassen.

5. System nach einem der Ansprüche 1 - 4,
**dadurch gekennzeichnet,**
**dass** das elektronische Gerät (2) ferner aufweist:
eine Ausgabeeinrichtung zum Ausgeben einer Nachfrage an einen Benutzer des elektronischen Geräts (2), anhand der der Benutzer gefragt wird, ob er dem bestimmten Zugriff auf das elektronische Gerät (2) durch das zu benutzende Anwendungsprogramm (4) zustimmt; und
eine Empfangseinrichtung zum Empfangen einer Antwort auf die Nachfrage von dem Benutzer; wobei
die Verarbeitungseinrichtung (8) geeignet ist, den bestimmten Zugriff auf das elektronische Gerät (2) durch das vorbestimmte Anwendungsprogramm (4) lediglich zuzulassen, falls die Antwort auf die Nachfrage angibt, dass der Benutzer dem bestimmten Zugriff zustimmt.

6. System nach einem der Ansprüche 1 - 5,
**dadurch gekennzeichnet,**
**dass** das elektronische Gerät (2) ferner aufweist:
eine Überprüfungseinrichtung zum Überprüfen, ob ein zu installierendes Anwendungsprogramm (4) die jeweilige zumindest eine Zugriffsvoraussetzung (6a - 6c) der Anzahl an Zugriffspunkten (5a - 5c), die das zu installierende Anwendungsprogramm (4) verwendet, erfüllt; und
eine Installiereinrichtung zum Installieren des zu installierenden Anwendungsprogramms (4) auf dem elektronischen Gerät (2) lediglich, falls die Überprüfungseinrichtung bestimmt, dass das zu installierende Anwendungsprogramm (4) die jeweilige zumindest eine Zugriffsvoraussetzung der Anzahl an Zugriffspunkten (5a - 5c), die das zu installierende Anwendungsprogramm (4) verwendet, erfüllt.

7. System nach einem der Ansprüche 1 - 6,
**dadurch gekennzeichnet,**
**dass** die jeweiligen Zugriffspunkte (5a - 5c) ferner Zugriffseigenschaften enthalten, welche Eigenschaften des durch den Zugriffspunkt (5a - 5c) gewährbaren bestimmten Zugriffs definieren.

8. Definitionsgerät (3) für ein System (1) nach einem der Ansprüche 1 - 7, welches geeignet ist, anhand von Angaben des zumindest einen Teilnehmers (11 - 13) die Anzahl an Zugriffspunkten (5a - 5c) zu definieren, wobei jeder der Zugriffspunkte (5a - 5c) zumindest eine Zugriffsvoraussetzung (6a - 6c) bestimmt, die durch ein den Zugriffspunkt (5a - 5c) verwendendes Anwendungsprogramm (4) zu erfüllen ist, um einen entsprechenden bestimmten Zugriff auf ein elektronisches Gerät (2) zu erhalten.

9. Verfahren zum sicheren Ausführen von Anwendungsprogrammen (4), wobei das Verfahren umfasst:
Ausführen (S5) der Anwendungsprogramme (4) auf einem elektronischen Gerät (2), wobei jedes Anwendungsprogramm (4) geeignet ist, beim Ausführen auf dem elektronischen Gerät (2) eine Anzahl an Zugriffspunkten (5a - 5c) zu verwenden, um einen bestimmten Zugriff auf das elektronische Gerät (2) zu erhalten;
Definieren (S1) der Anzahl an Zugriffspunkten (5a - 5c) durch zumindest einen Teilnehmer (11 - 13) anhand eines Definitionsgeräts (3), wobei jeder der Zugriffspunkte (5a - 5c) zumindest eine Zugriffsvoraussetzung (6a - 6c) bestimmt, die durch das den Zugriffspunkt (5a - 5c) verwendende Anwendungsprogramm (4) zu erfüllen ist, um den entsprechenden bestimmten Zugriff auf das elektronische Gerät (2) zu erhalten;
Speichern (S2) der anhand des Definitionsgeräts (3) definierten Zugriffspunkte (5a - 5c) auf dem elektronischen Gerät (2);
Bestimmen (S3) einer Überprüfungsinformation durch das elektronische Gerät (2), die angibt, ob ein auf dem elektronischen Gerät (2) auszuführendes vorbestimmtes Anwendungsprogramm (4) die jeweilige zumindest eine Zugriffsvoraussetzung (6a - 6c) der Anzahl an Zugriffspunkten (5a - 5c), die das vorbestimmte Anwendungsprogramm (4) verwendet, erfüllt; und
Zulassen (S4) des bestimmten Zugriffs, den die durch das vorbestimmte Anwendungsprogramm (4) verwendete Anzahl an Zugriffspunkten (5a - 5c) ermöglicht, durch das vorbestimmte Anwendungsprogramm (4) in Abhängigkeit von der Überprüfungsinformation.

10. Verfahren nach Anspruch 9, welches anhand des Systems (1) nach einem der Ansprüche 2 bis 7 durchgeführt wird.

11. Computerprogrammprodukt, welches auf einer programmgesteuerten Einrichtung die Durchführung des Verfahrens nach Anspruch 9 oder 10 veranlasst.
